(19) Europäisches Patentamt
European Patent Office
Office européen des brevets

(11) **EP 3 129 807 B1**

(12) **EUROPÄISCHE PATENTSCHRIFT**

(45) Veröffentlichungstag und Bekanntmachung des Hinweises auf die Patenterteilung:
**13.06.2018  Patentblatt 2018/24**

(21) Anmeldenummer: **15716020.1**

(22) Anmeldetag: **09.04.2015**

(51) Int Cl.:
**G01S 19/48** (2010.01)        **G01C 21/28** (2006.01)

(86) Internationale Anmeldenummer:
**PCT/EP2015/057731**

(87) Internationale Veröffentlichungsnummer:
**WO 2015/155292 (15.10.2015 Gazette 2015/41)**

(54) **POSITIONSKORREKTUR EINES FAHRZEUGS DURCH REFERENZIERUNG ZU OBJEKTEN IM UMFELD**

POSITION CORRECTION OF A VEHICLE BY REFERENCING TO OBJECTS IN THE SURROUNDINGS

CORRECTION DE POSITION D'UN VÉHICULE PAR RÉFÉRENCEMENT À DES OBJETS DANS L'ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2014   DE 102014206888**

(43) Veröffentlichungstag der Anmeldung:
**15.02.2017  Patentblatt 2017/07**

(73) Patentinhaber: **Continental Teves AG & Co. oHG 60488 Frankfurt (DE)**

(72) Erfinder: **SCHMID, Bernhard 61169 Friedberg (DE)**

(56) Entgegenhaltungen:
**US-A1- 2008 319 657      US-A1- 2011 161 032
US-A1- 2012 310 516      US-A1- 2013 151 146**

EP 3 129 807 B1

**Beschreibung**

Die Erfindung betrifft ein Verfahren sowie ein System zur Korrektur einer Position eines Fahrzeugs.

Im Stand der Technik ist es bekannt, Fahrzeuge über globale Satellitennavigationssysteme (hiernach kurz GNSS für "Global Navigation Satellite Systems"), wie z. B. GPS, zu orten bzw. die Position des Fahrzeugs zu bestimmen und die Fahrzeugposition mit einer digitalen Karte zusammenzuführen. Dazu wird die Posititon des Fahrzeuges mit einer plausiblen Position in der digitalen Karte in Deckung gebracht.

Aus den Dokumenten US 2013/151146 A1 und US 2008/319657 und gehen Verfahren zur Bestimmung einer Position eines Fahrzeugs mit einem GNSS zum Bestimmen der Eigenposition hervor, wobei eine erste Position des Fahrzeugs mittels des GNSS und eine zweite Position des Fahrzeugs durch Einpassen der ersten Position in eine Straße einer digitalen Karte ermittelt wird.

Die US 2012/310516 A1 beschreibt ein Verfahren zur Bestimmung einer Position eines Fahrzeugs mit einem GNSS zum Bestimmen der Eigenposition, wobei ein Objekt im Umfeld des Fahrzeugs identifiziert wird, dessen Position in einer digitalen Karte referenzierbar ist und ein realer Abstand zwischen dem Fahrzeug und dem Objekt ermittelt wird.

Durch die GNSS-Ortung wird jedoch maximal eine Ortungsgenauigkeit von 1 m erzielt. Diese Genauigkeit ist für eine spurgenaue Ortung auf einer Straße nicht ausreichend. Darüber hängt die Genauigkeit der bekannten Verfahren maßgeblich von der Qualität der Kartendaten ab.

Aufgabe der Erfindung ist es daher ein Verfahren oder ein System aufzuzeigen, womit eine Fahrzeugposition präziser ermittelbar ist.

Die Aufgabe wird gelöst gemäß einem ersten Aspekt der Erfindung mittels eines Verfahrens nach Anspruch 1. Bevorzugte Ausführungsformen sind Gegenstand der abhängigen Ansprüche, die durch Bezugnahme ausdrücklich zum Gegenstand der Beschreibung gemacht werden.

Erfindungsgemäß wird ein Verfahren zur Korrektur einer Position eines Fahrzeugs mit einem globalen Satellitennavigationssystem GNSS zum Bestimmen der Eigenposition vorgeschlagen, das die Schritte aufweist:

- Ermitteln einer ersten Position des Fahrzeugs mittels des GNSS,
- Ermitteln einer zweiten Position des Fahrzeugs durch Einpassen der ersten Position in eine Straße einer digitalen Karte,
- Identifizieren mindestens eines Objektes im Umfeld des Fahrzeugs, dessen Position in der digitalen Karte referenzierbar ist,
- Ermitteln eines realen Abstandes zwischen dem Fahrzeug und dem jeweiligen Objekt mittels eines Sensors des Fahrzeugs,
- Berechnen eines errechneten Abstandes zwischen der zweiten Position und dem jeweiligen Objekt,

wobei eine korrigierte Position des Fahrzeugs durch Minimieren der Abweichung des errechneten Abstands vom realen Abstand ermittelt wird.

Die Erfindung basiert zum einen auf den Grundgedanken zusätzlich zu den vorhandenen Kartendaten mindestens ein, vorzugsweise zwei oder drei, Objekte in der Umgebung als zusätzliche Referenzpunkte für die Positionserfassung des Fahrzeugs zu verwenden. Ein weiterer wesentlicher Gedanke der Erfindung umfasst es, zwei Datenbilder miteinander zu vergleichen. Erfindungsgemäß wird vorgeschlagen ein erstes reales Positionsbild des Fahrzeugs mit einem virtuellen Positionsbild des Fahrzeugs zu vergleichen. Unter dem Begriff Positionsbild sind die Informationen zu unterschiedlichen Positionen zu verstehen, u. a. Position des Fahrzeugs und Position des Objekts oder der Objekte. Das reale Positionsbild wird aus Messungen anhand von Mitteln zusammengestellt, die im Fahrzeug vorhanden sind. Diese sind beispielsweise das GNNS und weitere im Fahrzeug verbaute Sensoren oder auch Datenempfänger. Das virtuelle Positionsbild wird aus empfangenen oder berechneten digitalen Daten zusammengestellt. Ein wesentlicher Bestandteil der Positionsbilder sind die Abstände zwischen Fahrzeugposition und den Objekten. Das Verwenden von Abständen hat den Vorteil, dass ein die Positionsbilder vektoriell definierbar sind, womit die Handhabung der Daten wesentlich vereinfacht wird.

Vorteilhaft für das Verfahren ist es Objekte zu nehmen, die in näherer Umgebung des Fahrzeugs positioniert sind, so dass die Annahme getroffen werden kann, dass der betrachtete Bereich eine Ebene ist.

Unter eine digitale Karte wird insbesondere eine Straßenkarte verstanden in der Position und ggf. auch Abmessungen von Straßen hinterlegt sind. Ferner umfasst die digitale Karte auch Positionen und ggf. auch Abmessungen von Objekten innerhalb des Kartenreferenzsystems. Objekte können Verkehrsanlagen, Gebäude, Haltestellen, markante Straßenunebenheiten oder dgl. sein.

Gemäß einer vorteilhaften Ausführungsform des erfindungsgemäßen Verfahrens wird die digitale Karte iterativ derart verschoben wird, so dass die Abweichung des errechneten Abstands vom realen Abstand minimiert. Dies beruht auf der Annahme, dass die digitale Karte nicht zwangsläufig die präziseren Daten enthält und eine einseitige Korrektur der Fahrzeugposition nach der digitalen Karte nicht zweckmäßig ist. Alternativ ist es aber auch denkbar iterativ die ermittelte erste Position so zu verschieben, so dass die Abweichung zwischen den vorstehend definierten Abständen geringer wird.

Gemäß einer vorteilhaften Ausführungsform des erfindungsgemäßen Verfahrens umfasst das Verschieben der digitalen Karte mindestens eine translatorische und eine rotatorische Verschiebung. Auf diese Weise ist eine besonders präzise und schnelle Anpassung der Karte zum Erreichen der minimalsten Abweichung möglich.

Gemäß einer vorteilhaften Ausführungsform des erfindungsgemäßen Verfahrens wird die Minimierung der Abweichung gemäß der Methode der kleinsten Quadrate bzw. Least-Square Method ermittelt. Dieses Verfahren hat sich als besonders praktikabel erwiesen. Die Methode lässt sich unabhängig davon anwenden, ob man die Karte oder eine Position verschiebt.

Gemäß einer vorteilhaften Ausführungsform des erfindungsgemäßen Verfahrens werden mehrere Objekte, insbesondere zwei bis drei, erfasst. Insbesondere mit zwei bis drei Objekten lässt sich die Position des Fahrzeugs mit geringem Aufwand bei ausreichend hoher Präzision korrigieren.

Gemäß einer vorteilhaften Ausführungsform umfasst das erfindungsgemäße Verfahren ferner den Schritt:

- Durchführen einer zweiten Korrektur der korrigierten Position durch Einpassen der korrigierten Position in eine plausible Fahrspur der Straße.

Durch diesen letzten finalen Schritt kann eine präzisere Korrektur der Fahrzeugposition sichergestellt werden, da die erste Einpassung in die Karte nicht zwangsläufig spurgetreu erfolgen muss und des weiteren durch Verschiebung der Karte eine erste Ausrichtung nach der Fahrspur wieder verloren gehen kann.

Gemäß einer vorteilhaften Ausführungsform umfasst das erfindungsgemäße Verfahren ferner den Schritt:

- Ermitteln des kürzesten Abstandes der ersten Position zu einem Punkt auf Straße, insbesondere plausiblen Fahrspur der Straße, in der digitalen Karte, und
- Einpassen der ersten Position an diesem Punkt zum Ermitteln der zweiten Position.

Auf diese Weise ist eine besonders schnelle Einpassung der ersten Position in die digitale Karte möglich. In entsprechender Weise kann auch eine Einpassung in die Fahrspur gemäß dem letzten Schritt in der vorgenannten Ausführungsform erfolgen.

Gemäß einer vorteilhaften Ausführungsform des erfindungsgemäßen Verfahrens erfolgt das Ermitteln des realen Abstandes mittels Umfeldsensorik, Kamerasensorik und/oder Radarsensorik und/oder Lidarsenorik und/oder Ultraschallsensorik und/oder Temperatursensorik und/oder Regensensorik und/oder Straßenzustandssensorik und/oder Fahrwerksensorik. Unter Fahrwerksensorik sind bspw. Raddrehzahlsensoren, Beschleunigungssensoren, Gierratensensoren oder dergleichen zu verstehen.

Gemäß einer vorteilhaften Ausführungsform des erfindungsgemäßen Verfahrens erfolgt das Ermitteln der ersten Position ferner mittels der mehrerer Fahrzeugsensoren. Auf diese Weise wird eine möglichst hohe Präzision der ersten Position erreicht. Darüber hinaus kann auf diese Weise ein das fehlen oder eine schlechte Qualität der Satellitensignale ausgeglichen werden.

Gemäß einer vorteilhaften Ausführungsform des erfindungsgemäßen Verfahrens erfolgt das Ermitteln der ersten Position ferner mittels einer Sensorfusionseinheit zum Zusammenführen und Plausibilisieren der Sensordaten. Unter einer Sensorfusionseinheit kann beispielsweise eine Einheit der Anmelderin verstanden werden, die u. a. unter dem Namen "M2XPro" intern bezeichnet und auch vermarktet wird. Auf diese Weise wird eine besonders hohe Präzision der ersten Position erreicht.

Gemäß einer vorteilhaften Ausführungsform des erfindungsgemäßen Verfahrens wird die Position des Objektes mittels einer Fahrzeug-2-X Nachricht übermittelt. Auf diese Weise kann eine alternative oder zusätzliche Datenquelle zur Angabe der Position von Objekten erschlossen werden.

Gemäß einer vorteilhaften Ausführungsform umfasst das erfindungsgemäße Verfahren eine Korrektur der Position des jeweiligen Objektes und Übermitteln der korrigierten Position des jeweiligen Objektes an einen Kartenserver. Auf diese Weise kann eine sukzessive Verbessrung des Kartenmaterials und damit einhergehend eine geringere Abweichung zwischen dem realen und virtuellen Positionsbild erreicht werden.

Gemäß einer vorteilhaften Ausführungsform des erfindungsgemäßen Verfahrens wird die digitale Karte von einem Kartenserver bezogen.

Gemäß einer vorteilhaften Ausführungsform umfasst das erfindungsgemäße Verfahren ferner den Schritt:

- Überprüfen eines Zeitstempels der digitalen Karte und Auswählen der digitalen Karte, wenn diese digitale Karte die höchste Aktualität aufweist.

Auf diese Weise wird sichergestellt, dass stets die aktuellste Version der digitalen Karte verwendet wird, um im Vorfeld unnötige Abweichungen zwischen dem realen und virtuellen Positionsbild zu vermeiden.

Die Erfindung wird ferner nach einem zweiten Aspekt der Erfindung gelöst mittels eines Systems zum Korrigieren einer Position eines Fahrzeugs mit einem globalen Satellitennavigationssystem GNSS zum Bestimmen der Eigenposition aufweisend

- ein GNSS zum Ermitteln einer ersten Position des Fahrzeugs,
- eine digitale Karte und eine Recheneinheit zum ermitteln einer zweiten Position des Fahrzeugs durch Einpassen der ersten Position in eine Straße in der digitalen Karte,
- Mittel zum Identifizieren mindestens eines Objektes im Umfeld des Fahrzeugs, dessen Position in der digitalen Karte referenzierbar ist,
- Sensoren zum Ermitteln eines realen Abstandes zwischen dem Fahrzeug und dem jeweiligen Objekt mittels eines Sensors des Fahrzeugs,

wobei die Recheneinheit ferner zum Berechnen eines er-rechneten Abstandes zwischen der zweiten Position und dem jeweiligen Objekt ausgebildet ist, und wobei eine korrigierte Position des Fahrzeugs durch Minimieren der Abweichung des errechneten Abstands vom realen Abstand ermittelbar ist.

Das System ist ferner derart ausgebildet, dass es ein Verfahren gemäß den vorgenannten Ausführungsformen mittels des Systems ausführbar ist.

Die Erfindung wird nachfolgend anhand eines Ausführungsbeispiels sowie von anhand von Figuren näher beschrieben. Es zeigen:

Fig. 1a-1f eine schrittweise Darstellung des erfindungsgemäßen Verfahrens anhand eines Ausführungsbeispiels,

Fig. 2 einen beispielhaften ersten Aufbau einer Funktionsarchitektur eines erfindungsgemäßen Systems mit möglichen Anwendungsfällen, und

Fig. 3 einen beispielhaften zweiten Aufbau einer Funktionsarchitektur eines erfindungsgemäßen Systems.

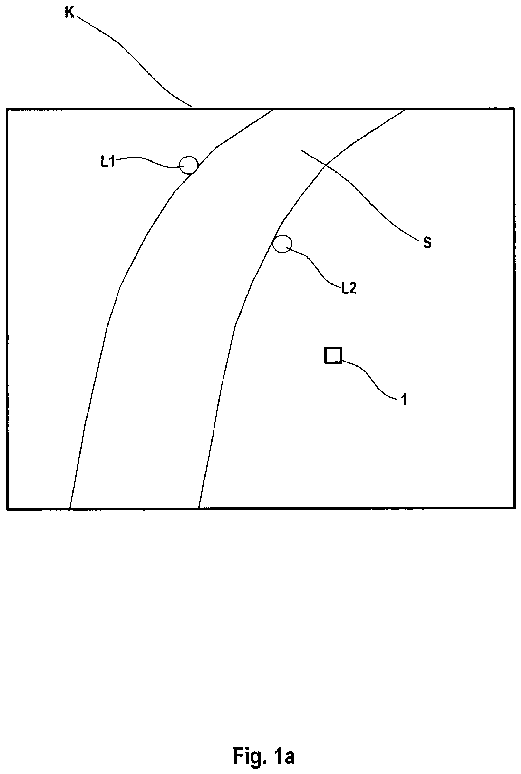

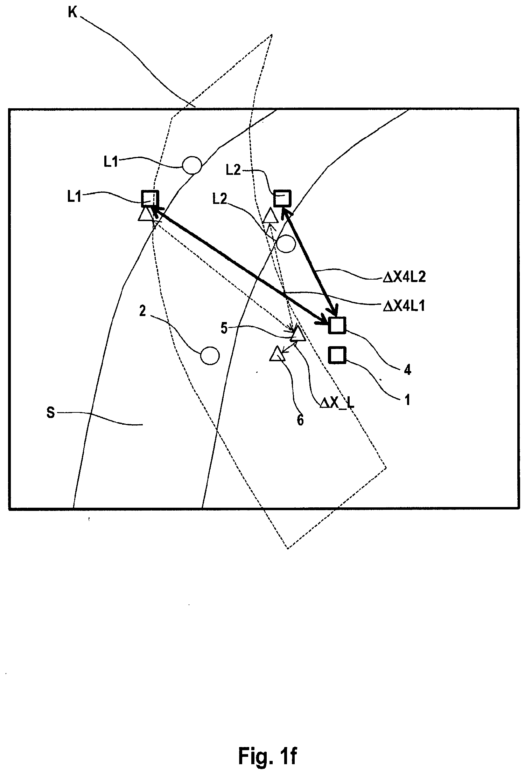

Figur 1a zeigt die Ausgangssituation des erfindungsgemäßen Verfahrens. Nachfolgend werden Positionen die zu einem virtuellen Positionsbild gehören mit Kreisen und Positionen die zu einem realen Positionsbild gehören mit Rechtecken dargestellt.

Im ersten Schritt wird eine erste Position 1 real ermittelt. Das Fahrzeug weist hierzu ein globales Satellitennavigationssystem GNSS, wie GPS oder Glonass, zum Bestimmen der Eigenposition auf womit es die erste Position 1 des Fahrzeugs ermittelt. Daneben weist das Fahrzeug eine Digitale Karte K auf, in der Position, Verlauf und Breite einer Straße S gespeichert ist. Ferner weist die Karte zwei Objekte L1, L2 oder Landmarken auf, zu denen die Position in der Karte gespeichert ist. Zwischen der ersten gemessenen Position 1 und der digitalen Karte K liegt eine Abweichung vor, wonach sich das Fahrzeug abseits der Straße befinden würde. Dieser Umstand wird im zweiten Schritt vorkorrigiert.

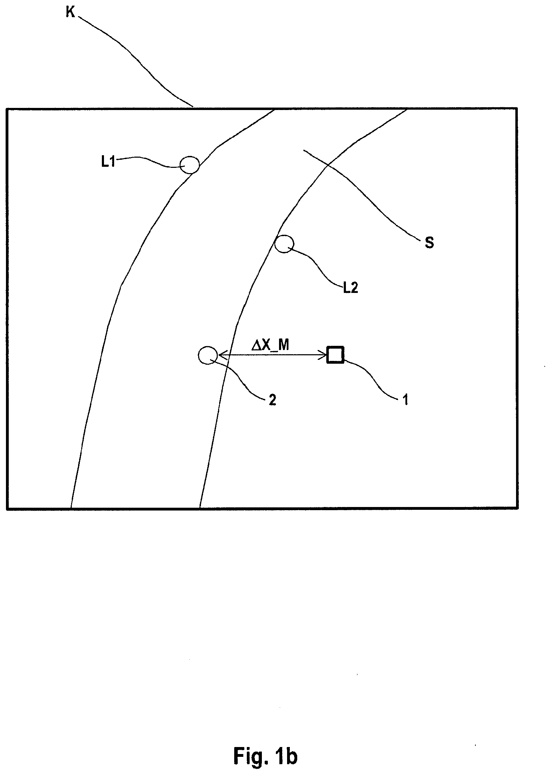

Im zweiten Schritt, wie in Figur 1b gezeigt, wird eine zweite Position 2 des Fahrzeugs durch Einpassen der ersten Position 1 in die Straße aus der digitalen Karte K ermittelt. Hierzu wird vorzugsweise der kürzeste Abstand der ersten Position zu einem Punkt auf Straße oder plausiblen Fahrspur der Straße ermittelt und die erste Position an diesem Punkt eingepasst, um so die zweite Position zu ermitteln. Daraus ergibt sich ein erster Positionsfehler $\Delta$X M.

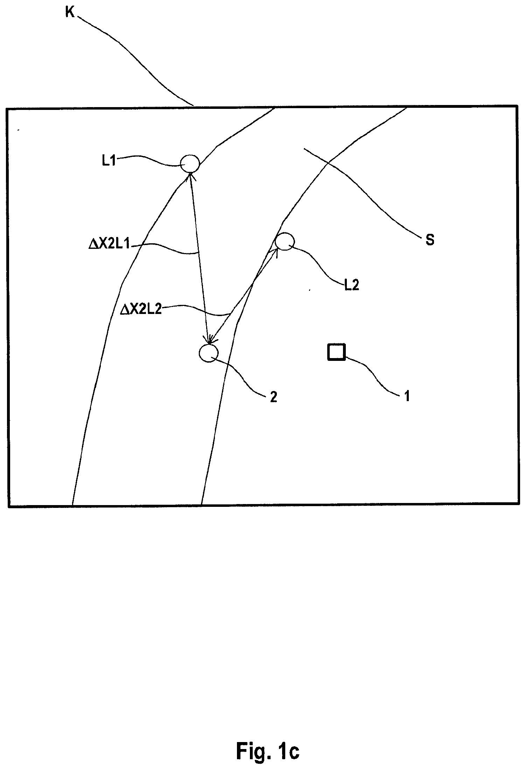

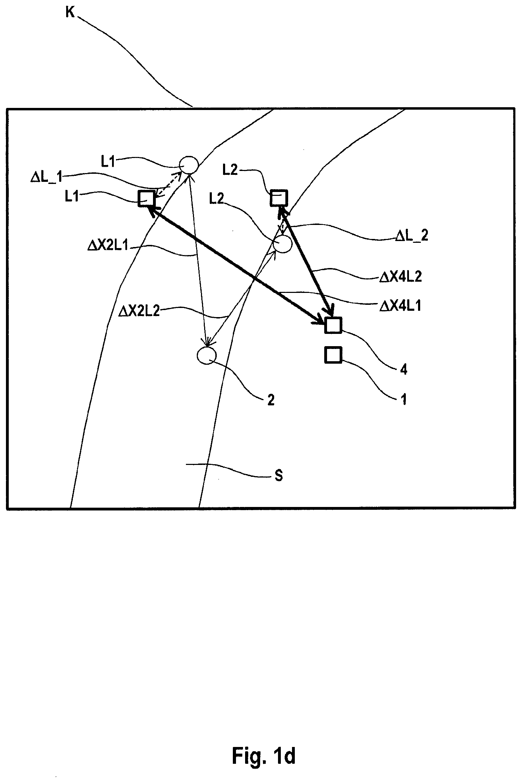

Im dritten Schritt finden zwei Vorgänge statt, woraus ein reales und ein virtuelles Positionsbild erstellt werden, wie in den Figuren 1c und 1d zu sehen. Ausgangspunkt im dritten Schritt ist das Identifizieren mindestens eines Objektes L1, L2, in diesem Beispiel zwei, im Umfeld des Fahrzeugs, dessen Position in der digitalen Karte referenzierbar ist und auch mittels des Fahrzeugs erfassbar ist.

In Figur 1c ist zunächst gezeigt, wie das virtuelle Positionsbild erstellt wird. Nachdem die Objekte L1, L2 identifiziert sind, wird der relative Abstand $\Delta$X2L1 und $\Delta$X2L2 zwischen der zweiten Position und dem jeweiligen Objekt ermittelt, wobei in den Bezugszeichen X2 für die zweite Position und L1 bzw. L2 für die Position des ersten bzw. zweiten Objektes steht.

In Figur 1d ist gezeigt, wie das reale Positionsbild erstellt wird. Mittels Sensoren des Fahrzeugs werden reale relative Abstände zwischen dem Fahrzeug bzw. dessen Position und dem jeweiligen Objekt bzw. dessen jeweilige Position ermittelt. Der einfachheit halber in den Figuren die Positionen der Objekte im realen Positionsbild auch mit L1 und L2 gekennzeichnet, auch wenn man hierfür ein weiteres Indize, wie z. B. _real, zur unterschiedlichen Kennzeichnung hätte verwenden können.

Je nach dem, um welche Objekte es sich handelt, können hier unterschiedliche Sensoren, wie z. B. Umfeldsensorik, Kamerasensorik und/oder Radarsensorik und/oder Lidarsenorik und/oder Ultraschallsensorik und/oder Temperatursensorik und/oder Regensensorik und/oder Straßenzustandssensorik und/oder Fahrwerksensorik zum Einsatz kommen. Sofern es sich beispielsweise bei dem Objekt um Teilaufpflasterungen handelt, können Beschleunigungs-, Raddrehzahl- und Lenkwinkelsensoren verwendet werden, um den Abstand zu dem Objekt zu ermitteln. Entsprechend könnte ein relativer realer Abstand zu anderen visuelle leicht erfassbaren Objekten mittels Kamerasensorik ermittelt werden.

Da erfindungsgemäß nicht die absolute Position, sondern der relative Abstand zwischen Fahrzeugposition und dem jeweiligen Objekt L1, L2 ermittelt und daraus eine Position der Objekte L1, L2 in projiziert wird, wird für das reale Positionsbild die absolute Position der Objekte L1, L2 nicht benötigt. Sofern diese absoluten Position der Objekte jedoch aus einer anderen Quelle als der digitalen Karte bekannt sind, können diese verwendet werden, um eine weiterere Vorkorrektur der Fahrzeugposition anhand des relativen Abstandes $\Delta$X4L1 und $\Delta$X4L2 zu ermitteln, woraus sich die Position 4, wie in Figur 1d gezeigt, ergibt. Andernfalls entspricht der relative Abstand dem, der zwischen den Objekten L1, L2 und der ersten Position 1 vorliegt und $\Delta$X1L1 und $\Delta$X1L2 zu benennen wäre.

In Figur 1d ist ferner die Abweichung $\Delta$L_i zu sehen, wobei das i zusammenfassend für den Index 1 bzw. 2 steht und die Abweichung der Abstände voneinander zwischen den Positionen L1 aus dem realen und virtuellen Positionsbild darstellt. Die Abweichung wird erfindungsgemäß aus der Differenz der Abstände ermittelt, d. h. für das Objekt L1 ergibt sich die Abweichung aus

$$\Delta L\_1 = \Delta X2L1 - \Delta X4L1$$

In entsprechender Weise wäre die Abweichung auch für das zweite Objekt bzw. für alle referenzierten Objekte zu ermitteln.

Im vierten Schritt wird nun eine korrigierte Position des Fahrzeugs ermittelt. Hierzu wird die minimale Abweichung des errechneten Abstands vom realen Abstand ermittelt. Besonders bevorzugt wird hierzu die Methode der kleinsten Quadrate verwendet, nämlich Positionsänderung iterativ so lange gesucht bis

$$Min(\Sigma(\Delta L\_i)^2$$

mit i>1 erreicht ist.

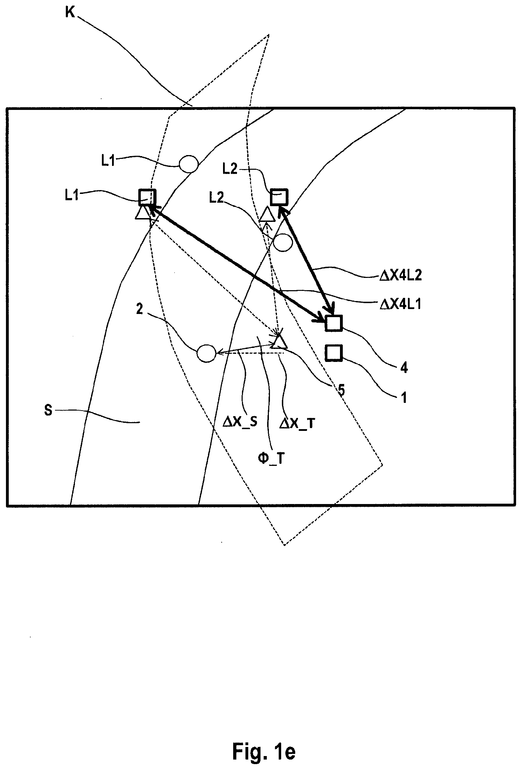

Besonders bevorzugt ist hierzu die digitale Karte iterativ derart zu verschieben, so dass die Abweichung des errechneten Abstands vom realen Abstand minimiert wird. In Figur 1e ist dieser Schritt exemplarisch gezeigt, wobei die verschobene Karte gestrichelt dargestellt ist. Die digitale Karte samt der zweiten Position 2 und der Position der Objekte L1, L2 wird iterativ so lange verschoben, bis die minimalste Abweichung erreicht ist. Das Verschieben der digitalen Karte umfasst dabei mindestens eine translatorische und eine rotatorische Verschiebung. Im Beispielsfall, wie in Figur 1e gezeigt, handelt es sich um eine translatorische Verschiebung um die Strecke ΔX_T und um eine rotatorische Verschiebung Φ_T. Aus dieser Verschiebung ergibt sich eine verbesserte korrigierte Position 5, wie in Figur 1e dargestellt. Der zweite Positionsfehler ist in Figur 1e als ΔX_S gekennzeichnet und umfasst sowohl den translatorischen als auch den rotatorischen Fehler.

Abschließend kann in einem fünften Schritt das Verfahren noch weiter verbessert werden, indem eine zweite Korrektur durchgeführt wird, wo die korrigierten Position durch Einpassen der korrigierten Position in eine plausible Fahrspur der Straße nochmals korrigiert wird. Vorteilhafterweise wird hierzu die zuletzt korrigierte Position passend zur digitalen Karte verschoben, so dass es sich in der richtigen Spur befindet, d. h. passend zur Fahrtrichtung. Die korrigierte Position des Fahrzeugs ist dann diese zuletzt korrigierte Position 6. Alternativ kann aber auch auf diesen Schritt verzichtet werden. Dann ist die vorgenannte Position 5 die korrigierte Position. Auch der letzte Schritt kann in einen Positionsfehler ΔX_L enthalten, der sich aus einem translatorischen und rotatorischen Fehler zusammensetzt.

Der Gesamtfehler der Position bzw. der Korrekturwert der Position setzt sich daher aus den drei Positionsfehlern ΔX_M, ΔX_S und ΔX_L zusammen, d. h.

$$\Delta X\_Total = \Delta X\_M + \Delta X\_S + \Delta X\_L$$

aus einem Karteneinpassungsfehler, aus einem Kartenverschiebungsfehler und einem Spureinpassungsfehler.

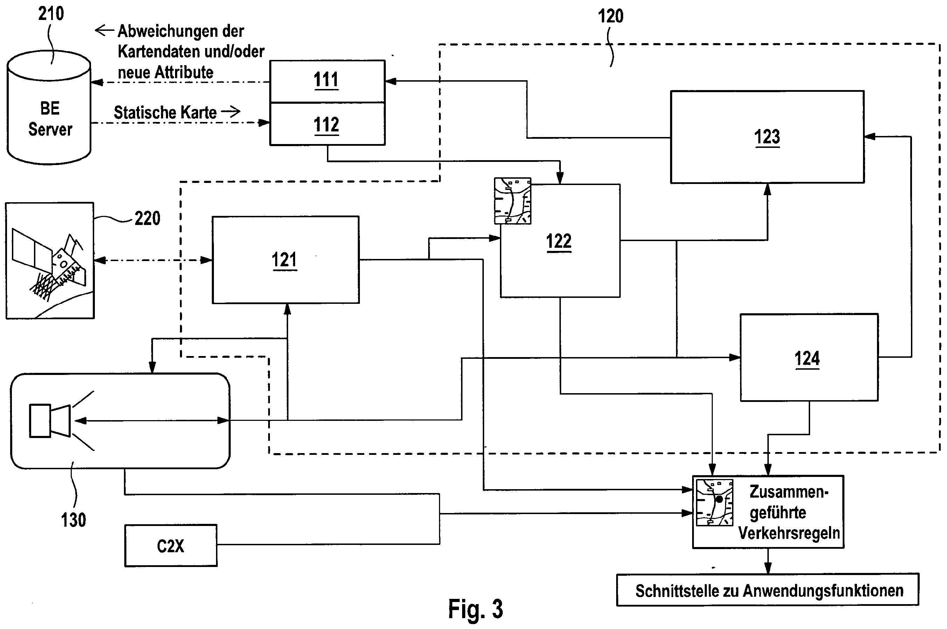

Das erfindungsgemäße Verfahren kann über die oben beschriebenen Beispiele hinaus dadurch verbessert werden, indem die erste Position ferner mittels der mehrerer Fahrzeugsensoren erfolgt, insbesondere mittels einer Sensorfusionseinheit M2XPro zum Zusammenführen und Plausibilisieren der Sensordaten ermittelt wird. Eine solche Sensorfusionseinheit M2XPro ist in Figur 3 gezeigt und kann zusammen mit der GNSS Einheit eine Systemeinheit bilden.

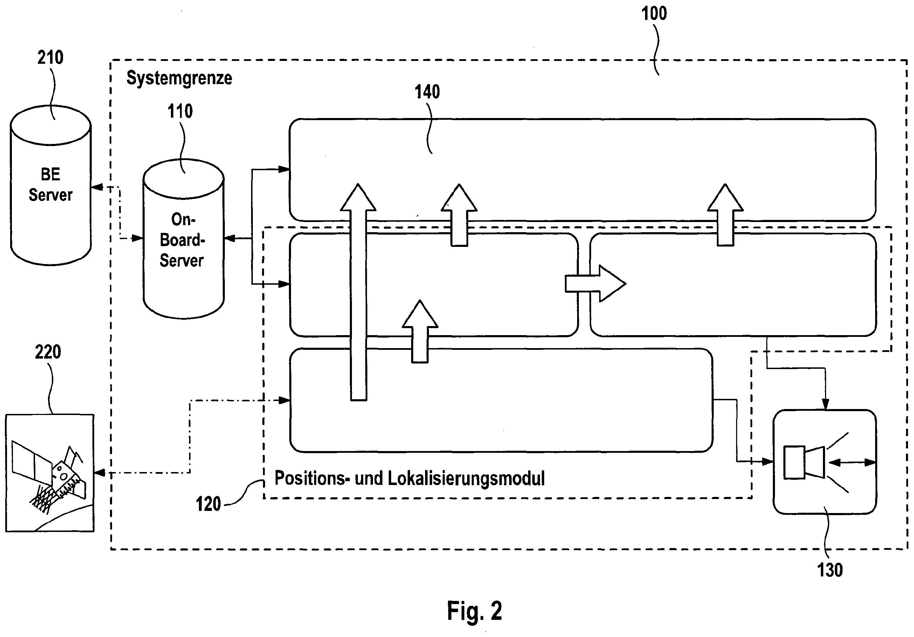

In den Figuren 2 und 3 ist ein Ausführungsbeispiel eines erfindungsgemäßen Fahrzeugsystems in zwei unterschiedlichen Detailebenen gezeigt.

In Figur 2 ist das Fahrzeugsystem auf einer Systemebene gezeigt. Es zeigt das System 100, wobei in gestrichelten Linien die Systemgrenze in Figur 2 dargestellt ist. Das System 100 ist u. a. mit einem Backend Server 210, z. B. ein Kartenserver, verbunden, worüber aktuelle Daten zur digitalen Karte beziehbar sind. Dieser ist mit einem internen Server 110 des Fahrzeugs, was Bestandteil des Systems 100 ist, verbunden. Darüber hinaus ist das System 100 mit mindestens einem Satelliten 220 verbunden.

Das System 100 weist unter anderem einen Positions- und Lokalisierungsmodul 120 auf, das in mit dem internen Server 110, den Satelliten 220 und mit mehreren Sensoren 130 gekoppelt ist. Eine detaillierte Darstellung des Positions- und Lokalisierungsmoduls 120 ist in Figur 3 gezeigt und wird hiernach noch näher beschrieben. Das Positions- und Lokalisierungsmodul 120 ist mit mehreren in einer Anwendungsschicht 140 angeordneten Anwendungen verbunden und stellt diesen die korrigierte Position 5 bzw. 6 bereit.

In Figur 3 ist eine detaillierte Darstellung des Positions- und Lokalisierungsmoduls 120 gezeigt. Es umfasst eine Lokalisierungseinheit 121, die eine GNSS Einheit und einer Sensorfusionseinheit umfasst und worüber die erste Position 1 des Fahrzeugs ermittelbar ist. Diese ist mit mindestens einem GNSS Satelliten und mehreren Sensoren 130 gekoppelt.

Darüber hinaus umfasst das Positions- und Lokalisierungsmodul 120 Einheit 122 zum Einpassen der ersten Position in eine digitale Karte. Eine weitere Einheit 123 dient zum Erkennen und Plausibilisieren von Objekten. Eine dritte Einheit 124 dient zur Ausrichtung der digitalen Karte und Einpassen der korrigierten Position in eine plausible Fahrspur.

Das Fahrzeugsystem 100 erlaubt es u. a. Daten zu Objektes mittels über Fahrzeug-2-X Nachricht zum empfangen, wie mittels der Verbindung 125 zwischen dem V2X bzw. C2X Modul und den Sensoren dargestellt.

Ferner ermöglicht das System eine korrigierte Position eines Objektes oder korrigierte Daten zur digitalen Karten an einen Kartenserver zu übermitteln. Dies erfolgt über den internen Server 110 der hierzu eine Up- und Download Einheit 111, 112 aufweist. Auf diese Weise ist es möglich die digitale Karte von einem Kartenserver zu beziehen und diese mittels eines Zeitstempels der digitalen Karte zu überprüfen und zu verwerfen, wenn eine andere digitale Karte eine höhere Aktualität aufweist.

**Patentansprüche**

1. Verfahren zur Korrektur einer Position eines Fahrzeugs mit einem globalen Satellitennavigationssystem GNSS zum Bestimmen der Eigenposition, aufweisend die Schritte:

- Ermitteln einer ersten Position des Fahrzeugs mittels des GNSS,
- Ermitteln einer zweiten Position des Fahrzeugs durch Einpassen der ersten Position in eine Straße einer digitalen Karte,
- Identifizieren mindestens eines Objektes im Umfeld des Fahrzeugs, dessen Position in der digitalen Karte referenzierbar ist,
- Ermitteln eines realen Abstandes zwischen dem Fahrzeug und dem jeweiligen Objekt mittels eines Sensors des Fahrzeugs, **gekennzeichnet durch**,
- Berechnen eines errechneten Abstandes zwischen der zweiten Position und dem jeweiligen Objekt,

wobei eine korrigierte Position des Fahrzeugs durch Minimieren der Abweichung des errechneten Abstands vom realen Abstand ermittelt wird.

2. Verfahren nach Anspruch 1, wobei die digitale Karte iterativ derart verschoben wird, so dass die Abweichung des errechneten Abstands vom realen Abstand minimiert wird.

3. Verfahren nach Anspruch 2, wobei das Verschieben der digitalen Karte mindestens eine translatorische und eine rotatorische Verschiebung umfasst.

4. Verfahren nach einem der vorstehenden Ansprüche, wobei die Minimierung der Abweichung gemäß der Methode der kleinsten Quadrate ermittelt wird.

5. Verfahren nach einem der vorstehenden Ansprüche, wobei mehrere Objekte, insbesondere zwei bis drei, erfasst werden.

6. Verfahren nach einem der vorstehenden Ansprüche, ferner umfassend den Schritt:

- Durchführen einer zweiten Korrektur der korrigierten Position durch Einpassen der korrigierten Position in eine plausible Fahrspur der Straße.

7. Verfahren nach einem der vorstehenden Ansprüche, ferner Umfassend den Schritt:

- Ermitteln des kürzesten Abstandes der ersten Position zu einem Punkt auf Straße, insbesondere plausiblen Fahrspur der Straße, in der digitalen Karte, und
- Einpassen der ersten Position an diesem Punkt zum Ermitteln der zweiten Position.

8. Verfahren nach einem der vorstehenden Ansprüche, wobei das Ermitteln des realen Abstandes mittels Umfeldsensorik, Kamerasensorik und/oder Radarsensorik und/oder Lidarsenorik und/oder Ultraschallsensorik und/oder Temperatursensorik und/oder Regensensorik und/oder Straßenzustandssensorik und/oder Fahrwerksensorik erfolgt.

9. Verfahren nach einem der vorstehenden Ansprüche, wobei das Ermitteln der ersten Position ferner mittels der mehrerer Fahrzeugsensoren erfolgt.

10. Verfahren nach dem vorstehenden Anspruch, wobei das Ermitteln der ersten Position ferner mittels einer Sensorfusionseinheit zum Zusammenführen und Plausibilisieren der Sensordaten erfolgt.

11. Verfahren nach einem der vorstehenden Ansprüche, wobei die Position des Objektes mittels einer Fahrzeug-2-X Nachricht übermittelt wird.

12. Verfahren nach einem der vorstehenden Ansprüche, ermitteln einer korrigierten Position des jeweiligen Objektes und übermitteln der korrigierten Position des jeweiligen Objektes an einen Kartenserver.

13. Verfahren nach einem der vorstehenden Ansprüche, wobei die digitale Karte von einem Kartenserver bezogen wird.

14. Verfahren nach einem der vorstehenden Ansprüche, ferner umfassend den Schritt

- Überprüfen eines Zeitstempels der digitalen Karte und verwerfen der digitalen Karte, wenn eine andere digitale Karte eine höhere Aktualität aufweist.

15. System zum Korrigieren einer Position eines Fahrzeugs mit einem globalen Satellitennavigationssystem GNSS zum Bestimmen der Eigenposition, insbesondere zum Ausführen eines Verfahrens nach einem der Ansprüche 1 bis 14, aufweisend

- ein GNSS zum Ermitteln einer ersten Position des Fahrzeugs,
- eine digitale Karte und eine Recheneinheit zum ermitteln einer zweiten Position des Fahrzeugs durch Einpassen der ersten Position in eine Straße in der digitalen Karte,
- Mittel zum Identifizieren mindestens eines Objektes im Umfeld des Fahrzeugs, dessen Position in der digitalen Karte referenzierbar ist,
- Sensoren zum Ermitteln eines realen Abstandes zwischen dem Fahrzeug und dem jeweiligen Objekt mittels eines Sensors des Fahrzeugs,

**dadurch gekennzeichnet, dass** die Recheneinheit ferner zum Berechnen eines errechneten Abstandes zwischen der zweiten Position und dem jeweiligen Objekt ausgebildet ist, und wobei eine korrigierte Position des Fahrzeugs durch Minimieren der Abweichung des errechneten Abstands vom realen Abstand ermittelbar ist.

**Claims**

1. Method for correcting a position of a vehicle with a global satellite navigation system GNSS for determining the actual position, comprising the steps:

   - determining a first position of the vehicle by means of the GNSS,
   - determining a second position of the vehicle by fitting the first position into a road of a digital map,
   - identifying at least one object in the surroundings of the vehicle, the position of which can be referenced in the digital map,
   - determining a real distance between the vehicle and the respective object by means of a sensor of the vehicle, **characterized by**
   - calculation of a computed distance between the second position and the respective object,

   wherein a corrected position of the vehicle is determined by minimizing the deviation of the computed distance from the real distance.

2. Method according to Claim 1, wherein the digital map is shifted iteratively so that the deviation of the calculated distance from the real distance is minimized.

3. Method according to Claim 2, wherein the displacement of the digital map comprises at least one translational and one rotational displacement.

4. Method according to any one of the preceding claims, wherein the minimization of the deviation is determined according to the method of least squares.

5. Method according to any one of the preceding claims, wherein a plurality of objects, in particular two to three, are detected.

6. Method according to any one of the preceding claims, further comprising the step:

   - performing a second correction on the corrected position by fitting the corrected position into a plausible lane of the road.

7. Method according to any one of the preceding claims, further comprising the step:

   - determining the shortest distance from the first position to a point on the road, in particular a plausible lane of the road, in the digital map, and
   - fitting the first position in at said point to determine the second position.

8. Method according to any one of the preceding claims, wherein the determination of the real distance is carried out by means of an environment sensor system, a camera sensor system and/or a radar sensor system and/or a lidar sensor system and/or an ultrasonic sensor system and/or a temperature sensor system and/or a rain sensor system and/or a road condition sensor system and/or a chassis sensor system.

9. Method according to any one of the preceding claims, wherein the determination of the first position is further carried out by means of the plurality of vehicle sensors.

10. Method according to the preceding claim, wherein the determination of the first position is further carried out by means of a sensor fusion unit for merging and plausibility checking the sensor data.

11. Method according to any one of the preceding claims, wherein the position of the object is transmitted by means of a vehicle-2-X message.

12. Method according to any one of the preceding claims, comprising determining a corrected position of the respective object and transmitting the corrected position of the respective object to a map server.

13. Method according to any one of the preceding claims, wherein the digital map is obtained from a map server.

14. Method according to any one of the preceding claims, further comprising the step

   - checking a time stamp of the digital map and discarding the digital map if another digital map is more up to date.

15. System for correcting a position of a vehicle with a global satellite navigation system GNSS for determining the actual position, in particular for carrying out a method according to any of the Claims 1 to 14, comprising

- a GNSS for determining a first position of the vehicle,
- a digital map and a computing unit for determining a second position of the vehicle by fitting the first position into a road in the digital map,
- means for identifying at least one object in the surroundings of the vehicle, the position of which can be referenced in the digital map,
- sensors for determining a real distance between the vehicle and the respective object by means of a sensor of the vehicle,

**characterized in that** the computing unit is further designed for the calculation of a computed distance between the second position and the respective object, and
wherein a corrected position of the vehicle can be determined by minimizing the deviation of the computed distance from the real distance.

**Revendications**

1. Procédé de correction d'une position d'un véhicule avec un système de navigation par satellite global GNSS pour déterminer une position propre, comprenant les étapes consistant à :

- déterminer une première position du véhicule au moyen du GNSS,
- déterminer une seconde position du véhicule par l'adaptation de la première position dans une rue d'une carte numérique,
- identifier dans l'environnement du véhicule au moins un objet dont la position peut être référencée sur la carte numérique,
- déterminer une distance réelle entre le véhicule et l'objet respectif au moyen d'un capteur du véhicule, **caractérisé par** le fait de
- calculer une distance calculée entre la seconde position et l'objet respectif,

dans lequel une position corrigée du véhicule est déterminée en minimisant l'écart de la distance calculée par rapport à la distance réelle.

2. Procédé selon la revendication 1, dans lequel la carte numérique est déplacée de manière itérative afin de minimiser l'écart de la distance calculée par rapport à la distance réelle.

3. Procédé selon la revendication 2, dans lequel le décalage de la carte numérique comprend au moins un décalage de translation et un décalage de rotation.

4. Procédé selon l'une des revendications précédentes, dans lequel la minimisation de l'écart est déterminée selon la méthode des moindres carrés.

5. Procédé selon l'une des revendications précédentes, dans lequel plusieurs objets, notamment deux à trois objets, sont détectés.

6. Procédé selon l'une des revendications précédentes, comprenant en outre l'étape consistant à :

- effectuer une seconde correction de la position corrigée par l'adaptation de la position corrigée dans une voie plausible de la rue.

7. Procédé selon l'une des revendications précédentes, comprenant en outre l'étape consistant à :

- déterminer la distance la plus courte entre la première position et un point de la rue, en particulier une voie plausible de la rue, sur la carte numérique, et
- adapter la première position à ce point pour déterminer la seconde position.

8. Procédé selon l'une des revendications précédentes, dans lequel la détermination de la distance réelle est effectuée au moyen de capteurs d'environnement, de capteurs à caméras et/ou de capteurs radars et/ou de capteurs lidars et/ou de capteurs à ultrasons et/ou de capteurs de température et/ou de capteurs de pluie et/ou de capteurs d'état de la route et/ou de capteurs de châssis.

9. Procédé selon l'une des revendications précédentes, dans lequel la détermination de la première position est également effectuée au moyen des multiples capteurs du véhicule.

10. Procédé selon la revendication précédente, dans lequel la détermination de la première position est également effectuée au moyen d'une unité de fusionnement de capteurs destinée à combiner et contrôler la plausibilité des données de capteurs.

11. Procédé selon l'une des revendications précédentes, dans lequel la position de l'objet est transmise au moyen d'un message véhicule-2-X.

12. Procédé selon l'une des revendications précédentes, consistant à déterminer une position corrigée de l'objet respectif et à transmettre la position corrigée de l'objet respectif à un serveur de cartes.

13. Procédé selon l'une des revendications précédentes, dans lequel la carte numérique est obtenue à partir d'un serveur de cartes.

**14.** Procédé selon l'une des revendications précédentes, comprenant en outre l'étape consistant à

- vérifier un marqueur temporel de la carte numérique et à rejeter la carte numérique si une autre carte numérique est plus récente.

**15.** Système de correction d'une position d'un véhicule avec un système de navigation par satellite global GNSS pour déterminer la position propre, en particulier pour mettre en oeuvre un procédé selon l'une des revendications 1 à 14, comportant

- un GNSS destiné à déterminer une première position du véhicule,
- une carte numérique et une unité de calcul destinée à déterminer une seconde position du véhicule par l'adaptation de la première position dans une rue de la carte numérique,
- des moyens destinés à identifier dans l'environnement du véhicule au moins un objet dont la position peut être référencée sur la carte numérique,
- des capteurs destinés à déterminer une distance réelle entre le véhicule et l'objet respectif au moyen d'un capteur du véhicule,

**caractérisé en ce que** l'unité de calcul est en outre conçue pour calculer une distance calculée entre la seconde position et l'objet respectif, et dans lequel une position corrigée du véhicule peut être déterminée en minimisant l'écart de la distance calculée par rapport à la distance réelle.

**Fig. 1a**

K

L1

S

L2

ΔX_M

2

1

**Fig. 1b**

**Fig. 1c**

**Fig. 1d**

**Fig. 1e**

**Fig. 1f**

**Fig. 2**

EP 3 129 807 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013151146 A1
- US 2008319657 A
- US 2012310516 A1